# EUROPÄISCHE PATENTSCHRIFT

(11) **EP 3 712 564 B1**
(45) Veröffentlichungstag und Bekanntmachung des Hinweises auf die Patenterteilung: **11.01.2023**
(21) Anmeldenummer: 20163683.4
(22) Anmeldetag: 17.03.2020
(51) Int. Cl.: G01D 5/14, E05F 15/603

(54) **POSITIONSERFASSUNGSANORDNUNG FÜR DURCH EINE ANTRIEBSVORRICHTUNG VERFAHRBARE TÜREN ODER TORE**
POSITION DETECTING ASSEMBLY FOR DOORS OR GATES MOVABLE BY A DRIVING DEVICE
AGENCEMENT DE DÉTECTION DE LA POSITION POUR PORTES OU PORTAILS MOBILES AU MOYEN D'UN DISPOSITIF D'ENTRAÎNEMENT

(30) Priorität: 21.03.2019 DE 102019107324
(43) Veröffentlichungstag der Anmeldung: 23.09.2020
(73) Patentinhaber: Fraba B.V., 6416 SG Heerlen (NL)
(72) Erfinder: Machill, Konrad, 50935 Köln (DE); Dr. Forthaus, Martin, 50829 Köln (DE)
(74) Vertreter: terpatent Patentanwälte ter Smitten Eberlein-Van Hoof Rütten Daubert

(56) Entgegenhaltungen:
- EP-A1- 2 259 016
- WO-A1-2007/107649
- DE-A1- 19 506 938
- DE-A1-102008 059 775
- US-A1- 2006 208 726

## Beschreibung

Die Erfindung betrifft eine Positionserfassungsanordnung für durch eine Antriebsvorrichtung verfahrbare Türen oder Tore, mit einer Gehäuseanordnung, in dem eine Schaltwelle vorgesehen ist, die mit einer Antriebswelle der Antriebsvorrichtung verbindbar ist, wobei eine Sensoranordnung zur Positionserfassung der Schaltwelle und eine auf einer Platine angeordnete Steuereinheit in der Gehäuseanordnung vorgesehen sind, wobei die Sensoranordnung elektronisch mit der Steuereinheit verbunden ist, die wiederum mit der Antriebsvorrichtung verbindbar ist, wobei die Sensoranordnung ein mit der Schaltwelle wirkverbundenes Schaltzahnrad aufweist, das mit mindestens zwei Sensorzahnrädern kämmt, wobei die mindestens zwei Sensorzahnräder eine unterschiedliche Zähnezahl aufweisen und wobei jedem Sensorzahnrad ein berührungsloses Sensororgan zugeordnet ist.

Derartige Positionserfassungsanordnungen, bei denen die Schaltwelle in einem nicht veränderbaren Übersetzungsverhältnis mit der Antriebswelle der Antriebseinrichtung wirkverbunden ist, auch unter dem Begriff "Tor-Endschalter" bekannt, dienen dazu die Position einer verfahrbaren Tür oder eines verfahrbaren Tores zu erkennen bzw. zu überwachen. Insbesondere soll im Normalbetrieb eine jeweilige Endlage erkannt werden und folglich die Antriebsvorrichtung abgeschaltet werden, damit das Tor und/oder die Antriebsvorrichtung nicht beschädigt werden. Eine gattungsgemäße Positionserfassungsanordnung ist beispielsweise aus dem deutschen Gebrauchsmuster DE 9316823 bekannt. Diese Druckschrift offenbart eine Positionserfassungsanordnung, bei der die Sensoranordnung im Wesentlichen einen Absolutpositionssensor in Form eines mechanisch durchdrehbaren Potentiometers mit versetzt angeordneten Schleifern aufweist. Der Absolutpositionssensor ist elektronisch mit einer Steuereinheit verbunden, bei der sich in der Vergangenheit ein 11 Bit Protokoll etabliert hat. Dieses 11 Bit Protokoll entspricht 2.048 Steps, die zur Positionserfassung steuertechnisch über die sich aus dem unveränderbaren Untersetzungsverhältnis bei 360° Erfassungswinkel ergebende maximal mögliche Tür- bzw. Torlauflänge verteilt werden. Abhängig von den zur Toröffnung benötigten Wickelumdrehungen der Abtriebswelle und dem in der Antriebseinheit unveränderbaren Schaltwellen-Untersetzungsverhältnisses zwischen Abtriebswelle und Schaltwelle, ist es je nach Torkonstruktion und Größe möglich, dass von den maximal verfügbaren 2.048 Steps nur ein sehr kleiner Teil genutzt werden kann, was zu einer sehr groben Endschalterauflösung führt. Außerdem ist es denkbar, dass die 2.048 Steps gar nicht ausreichen, um ein besonders großes Tor komplett zu öffnen. In diesem Fall muss eine andere Antriebsvorrichtung mit einem abweichenden, ebenfalls unveränderlichen Untersetzungsverhältnis zur Schaltwelle, verwendet werden. Es sollte deutlich sein, dass insbesondere die Montage und Inbetriebnahme der Antriebsvorrichtung mit einer zugehörigen Positionserfassungsanordnung sehr aufwendig und daher kostenintensiv ist.

Aus der europäischen Patentanmeldung 2 259 016 A1 ist eine gattungsgemäße Positionserfassungsanordnung bekannt, bei der ein Sensorzahnrad mit drei Sensorzahnrädern kämmt, die wiederum berührungslosen Sensororganen zugeordnet sind.

Darüber hinaus ist aus der deutschen Offenlegungsschrift DE 195 06 938 A1 eine Positionserfassungsanordnung zur Winkelmessung einer Welle, auf der ein Schaltzahnrad angeordnet ist, wobei die Welle und damit auch das Schaltzahnrad ein Gehäuse durchstoßen, in dem mit dem Schaltzahnrad kämmende Sensorzahnräder, eine Sensoranordnung und eine Steuereinheit vorgesehen sind.

Weitere Positionserfassungsanordnungen sind aus der US 2006/0208726 A1, der WO 2007/107649 A1 und der DE 10 2008 059 775 A1 bekannt. Aufgabe der Erfindung ist es daher, die oben genannten Nachteile auf einfache und kostengünstige Weise zu vermeiden.

Diese Aufgabe wird dadurch gelöst, dass die Sensoranordnung ebenfalls auf der Platine angeordnet ist, wobei das jeweilige Sensororgan als Hall-Sensor, oder als AMR- oder als THR-Sensor, ausgebildet ist, der mit einem fest mit dem jeweiligen Sensorzahnrad verbundenen Permanentmagneten zusammenwirkt, wobei jeweils das Sensororgan auf der Platine unter einer Lagerschale für das jeweilige Sensorzahnrad vorgesehen ist, wobei der jeweilige Permanentmagnet in einem Hohlraum des jeweiligen Sensorzahnrades angeordnet ist, wobei das Sensorzahnrad und der Permanentmagnet drehbar auf der Lagerschale gelagert sind. Durch eine derartige Sensoranordnung ist ein Zerstören aufgrund der Unwissenheit einer Sensorposition eines Monteurs bei der Inbetriebnahme der Positionserfassungsanordnung nicht mehr möglich. Aufgrund der mindestens zwei vorhandenen Sensorzahnräder, die eine unterschiedliche Zähnezahl aufweisen, kann auf besonders einfache Weise ein Verdrehwinkel der Schaltwelle und damit die Position der Tür oder des Tores ermittelt werden. Der mögliche Verdrehwinkel ist hierbei auch nicht auf 360 Grad beschränkt, sondern kann auch ein Vielfaches hiervon betragen. Hierdurch ist eine besonders einfache und sichere Positionserfassung gewährleistet. Zusammenfassend kann festgestellt werden, dass hierdurch eine besonders bauraumgünstige Ausführung der Sensoranordnung geschaffen wird. Der Übersichtlichkeit halber wird nachfolgend immer ein Hall-Sensor als Sensor genannt. Wie dargelegt, kann jedoch auch ein AMR- oder auch THR-Sensor eingesetzt werden.

Ausgehend von einem festgelegten Protokoll der Steuereinheit ist es besonders vorteilhaft, wenn eine Winkelauflösung des Schaltzahnrades durch die Steuereinheit einstellbar ist.

Hierbei ist es besonders vorteilhaft, wenn die Steuereinheit einen Programmierschalter als Einstellmittel aufweist, durch den eine endliche Anzahl n von Winkelauflösungen schaltbar ist. Hierdurch kann dann beispielsweise das 11 Bit Protokoll wahlweise für eine 90 Grad Umdrehung, für eine 360 Grad Umdrehung, für eine 720 Grad Umdrehung und für eine 1.440 Grad Umdrehung der Schaltwelle in Abhängigkeit des zu montierenden Tores festgelegt werden. In besonders vorteilhafter Weise weist die Gehäuseanordnung eine Montagefläche auf, durch die der Programmierschalter zugänglich ist. Hierdurch kann der Programmierschalter nach Montage nicht mehr versehentlich bedient werden.

Um die Flexibilität insbesondere hinsichtlich des Anschlusses an eine Antriebsvorrichtung und der maximal zu erfassenden Umdrehungen auf einfache Weise zu erhöhen, kann eine Getriebestufe für die Schaltwelle vorgesehen sein.

Um das Spiel zwischen dem Schaltzahnrad und den Sensorzahnrädern zu minimieren und einen Verschleiß zu kompensieren ist es vorteilhaft, wenn das Schaltzahnrad und die Sensorzahnräder eine gegenläufig angewinkelte Stirnradverzahnung aufweisen, wobei das Schaltzahnrad mittels eines Vorspannungsorgans unter Vorspannung mit den Sensorzahnrädern kämmt. Das Vorspannungsorgan kann hier als Schraubendruckfeder ausgebildet sein.

Die Erfindung wird nachfolgend anhand einer Zeichnung näher erläutert, hierbei zeigt:
Figur 1 eine Explosionsansicht der erfindungsgemäßen Positionserfassungsanordnung,
Figur 2 die Positionserfassungsanordnung aus Figur 1 im montierten Zustand mit einer Getriebestufe, und
Figur 3 eine Detailansicht eines Schaltzahnrades und damit kämmender Sensorzahnräder in einer besonderen Ausführungsform zur Spielminimierung.

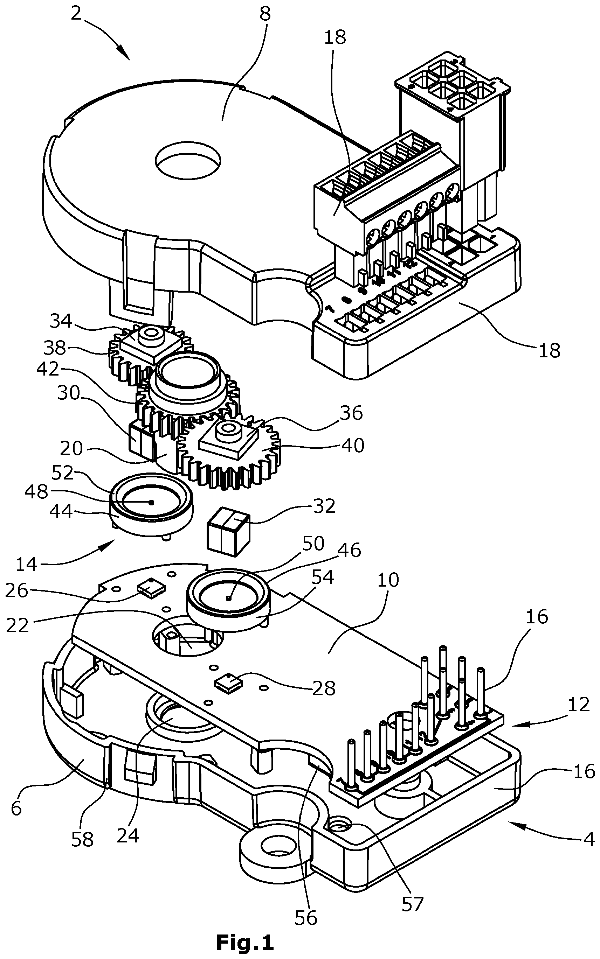

Figur 1 zeigt eine erfindungsgemäße Positionserfassungsanordnung 2 in einer Explosionsansicht. Die Positionserfassungsanordnung 2 weist eine Gehäuseanordnung 4 auf, die im vorliegenden Ausführungsbeispiel aus zwei zusammenklippsbaren Gehäuseteilen 6 und 8 besteht. In der Gehäuseanordnung 4 ist auf bekannte Weise eine schematisch dargestellte Platine 10 angeordnet, auf der eine Steuereinheit 12 und eine Sensoranordnung 14 vorgesehen sind. Im Bereich der Steuereinheit 12 sind auf bekannte Weise Kontaktstifte 16 und Kontaktterminals 18 dargestellt.

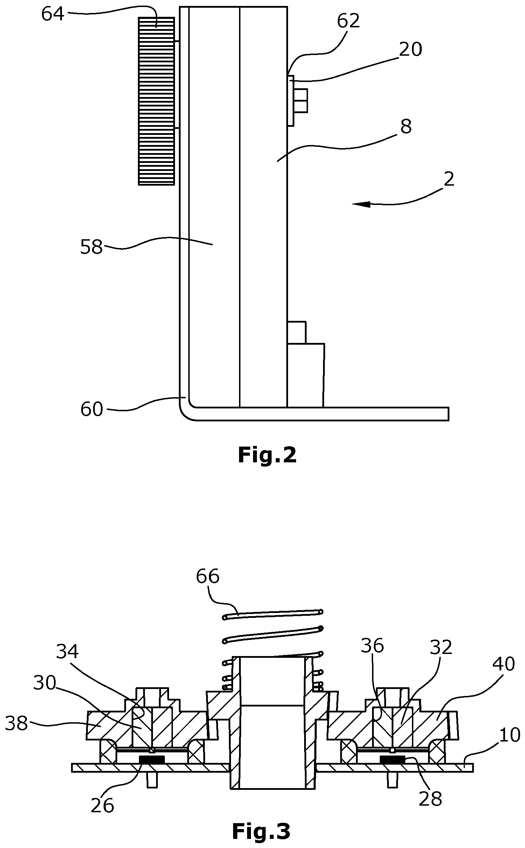

Zur Verbindung mit einer nicht weiter dargestellten Antriebsvorrichtung ist eine Schaltwelle 20 vorgesehen, die auf bekannte Weise durch eine Öffnung 22 der Platine 10 hindurchreicht und im Gehäuseteil 6 in einer Lagerstelle 24 gelagert ist. Die Detektion einer Position der Schaltwelle 20 soll auch bei mehreren vollständigen Umdrehungen durch die Sensoranordnung 14 derart detektiert werden, dass ein eindeutiger Rückschluss auf eine Position des durch die nicht dargestellte Antriebsvorrichtung bewegten Tores möglich ist. Die Sensoranordnung 12 weist hierzu zwei auf der Platine 10 angeordnete Sensororgane 26, 28 auf, die als Hall-Sensoren ausgebildet sind. Diese Hall-Sensoren 26, 28 wirken auf bekannte Weise mit Permanentmagneten 30, 32 zusammen, die formschlüssig in einem Hohlraum 34, 36 (siehe hierzu auch Figur 3) von Sensorzahnrädern 38, 40 angeordnet sind. Diese beiden Sensorzahnräder 38, 40 weisen eine unterschiedliche Zähnezahlen auf und kämmen jeweils mit einem mit der Schaltwelle 20 verbundenen Schaltzahnrad 42. Im vorliegenden Ausführungsbeispiel der Figur 1 sind die Sensorzahnräder 38, 40 und das Schaltzahnrad 42 jeweils als einfache Stirnradverzahnung ausgeführt. Durch die unterschiedliche Zähnezahl der Sensorzahnräder 38, 40 weisen diese Sensorzahnräder 38, 40 und damit auch die zugehörigen Permanentmagnete 30, 32, bei einer Verdrehung des Schaltzahnrades unterschiedliche Verdrehwinkel auf, wodurch eine Bestimmung der Absolutposition des zu überwachenden Tores auch bei mehreren vollständigen Umdrehungen der Schaltwelle 20 und damit des Schaltzahnrades 42 durch die Hall-Sensoren 26, 28 möglich ist. Um eine möglichst bauraumoptimierte Anordnung bereitzustellen, sind für die Sensorzahnräder 38, 40 Lagerschalen 44, 46 auf der Platine vorgesehen, die die Hall-Sensoren 26, 28 überdecken, und in denen sowohl die Permanentmagnete 30, 32 als auch die Sensorzahnräder 38, 40 drehbar gelagert sind. Die Permanentmagnete 30, 32 liegen hierbei auf einem Stiftorgan 48, 50 auf und die damit formschlüssig verbundenen Sensorzahnräder 38, 40 liegen auf einem jeweiligen Rand 52, 54 der jeweiligen Lagerschale 44, 46 auf.

Um nun auf einfache Weise eine Winkelauflösung bei der Montage der Antriebsvorrichtung und damit der Positionserfassungsanordnung 2 zu ermöglichen, weist die Steuereinheit 12 einen Programmierschalter 56 auf, der im vorliegenden Ausführungsbeispiel durch eine Öffnung 57 im Gehäuseteil 6 zu bedienen ist. Durch einfaches Antippen des Programmierschalters 56 können Winkelauflösungen bei einem 11 Bit Protokoll von 0,044 Grad pro Bit bei 90 Grad, von 0,176 Grad pro Bit bei 360 Grad, von 0,352 Grad pro Bit bei 720 Grad und von 0,703 Grad pro Bit bei 1.440 Grad Verdrehwinkel voreingestellt werden. So ist es auf einfache Art und Weise möglich, die Positionserfassungsanordnung vor Ort an das anzutreibende Tor anzupassen. Die Öffnung für den Zugang zum Programmierschalter 56 befindet sich in einer Montagefläche 58 des Gehäuseteils 6 und ist folglich gegen ein versehentliches Verstellen der Winkelauflösung gesichert.

Figur 2 zeigt nun die montierte Positionserfassungsanordnung 2 aus Figur 1. Die Positionserfassungsanordnung 2 ist mit der Montagefläche 58 an einem Flanschstück 60 angeordnet. Zu erkennen ist die Schaltwelle 20 die in eine Öffnung 62 des zweiten Gehäuseteils 8 hineinreicht. Die Schaltwelle 20 ist hier nicht direkt mit einer Antriebswelle einer Antriebsvorrichtung verbunden, sondern über eine Riemenscheibe 64 einer nicht weiter dargestellten Getriebestufe, die eine Untersetzung von 1 zu 4 vorsieht. Eine derartige Getriebestufe ermöglicht es auch, eine entfernt von der Positionserfassungsvorrichtung angeordnete Antriebsvorrichtung, die beispielsweise über einen Riementrieb mit dieser verbunden ist.

Figur 3 zeigt nun in einer teilweise geschnittenen Ansicht eine modifizierte Ausführung des Schaltzahnrades 42' sowie der Sensorzahnräder 38', 40'. Hierbei sind das Schaltzahnrad 42' und die Sensorzahnräder 38', 40' jeweils gegenläufig unter einem Winkel von 3 Grad (ist hier vergrößert dargestellt) angewinkelt zueinander ausgebildet, so dass das Schaltzahnrad 42' mittels als Schraubendruckfeder 66 ausgebildeten Vorspannungsorgans unter Vorspannung mit den Sensorzahnrädern 38', 40' kämmt. Deutlich zu erkennen ist hier auch der Hohlraum 34 in dem der Permanentmagnet 30 formschlüssig angeordnet ist.

## Patentansprüche

1. Positionserfassungsanordnung für durch eine Antriebsvorrichtung verfahrbare Türen oder Tore, mit einer Gehäuseanordnung (4), in dem eine Schaltwelle (20) vorgesehen ist, die mit einer Antriebswelle der Antriebsvorrichtung verbindbar ist, wobei eine Sensoranordnung (14) zur Positionserfassung der Schaltwelle (20) und eine auf einer Platine (10) angeordnete Steuereinheit (12) in der Gehäuseanordnung (4) vorgesehen sind, wobei die Sensoranordnung (14) elektronisch mit der Steuereinheit (12) verbunden ist, die wiederum mit der Antriebsvorrichtung verbindbar ist, wobei die Sensoranordnung (14) ein mit der Schaltwelle (20) wirkverbundenes Schaltzahnrad (42; 42') aufweist, das mit mindestens zwei Sensorzahnrädern (38, 40; 38', 40') kämmt, wobei die mindestens zwei Sensorzahnräder (38, 40; 38', 40') eine unterschiedliche Zähnezahl aufweisen und wobei jedem Sensorzahnrad (38, 40; 38', 40') ein berührungsloses Sensororgan (26, 28) zugeordnet ist, **dadurch gekennzeichnet, dass** die Sensoranordnung (14) ebenfalls auf der Platine (1) angeordnet ist, wobei das jeweilige Sensororgan (26, 28) als Hall-Sensor, oder als AMR- oder als THR-Sensor, ausgebildet ist, der mit einem fest mit dem jeweiligen Sensorzahnrad (38, 40; 38', 40') verbundenen Permanentmagneten (30, 32) zusammenwirkt, wobei jeweils das Sensororgan (26, 28) auf der Platine (10) unter einer Lagerschale (44, 46) für das jeweilige Sensorzahnrad (38, 40; 38', 40') vorgesehen ist, wobei der jeweilige Permanentmagnet (30, 32) in einem Hohlraum (34, 36) des jeweiligen Sensorzahnrades (38, 40; 38', 40') formschlüssig angeordnet ist, wobei das Sensorzahnrad (38, 40; 38', 40') und der Permanentmagnet (30, 32) drehbar auf der Lagerschale (44, 46) gelagert sind.

2. Positionserfassungsanordnung nach einem der vorhergehenden Ansprüche, **dadurch gekennzeichnet, dass** eine Winkelauflösung des Schaltzahnrades (42) durch die Steuereinheit (12) einstellbar ist.

3. Positionserfassungsanordnung nach Anspruch 2, **dadurch gekennzeichnet, dass** die Steuereinheit (12) einen Programmierschalter (56) als Einstellmittel aufweist, durch den eine endliche Anzahl n von Winkelauflösungen schaltbar ist.

4. Positionserfassungsanordnung nach Anspruch 3, **dadurch gekennzeichnet, dass** die Gehäuseanordnung (4) eine Montagefläche (58) aufweist, durch die der Programmierschalter (56) zugänglich ist.

5. Positionserfassungsanordnung nach einem der vorhergehenden Ansprüche, **dadurch gekennzeichnet, dass** eine Getriebestufe (64) für die Schaltwelle (20) vorgesehen ist.

6. Positionserfassungsanordnung nach einem der vorhergehenden Ansprüche, **dadurch gekennzeichnet, dass** das Schaltzahnrad (42; 42') und die Sensorzahnräder (38, 40; 38', 40') eine gegenläufig angewinkelte Stirnradverzahnung aufweisen, wobei das Schaltzahnrad (42; 42') mittels eines Vorspannungsorgans (66) unter Vorspannung mit den Sensorzahnrädern (38, 40; 38', 40') kämmt.

7. Positionserfassungsanordnung nach Anspruch 6, **dadurch gekennzeichnet, dass** das Vorspannungsorgan (66) als Schraubendruckfeder ausgebildet ist.

## Claims

1. Position detection arrangement for doors or gates which can be moved by a drive device, comprising a housing arrangement (4) in which a switching shaft (20) is provided which can be connected to a drive shaft of the drive device, wherein a sensor arrangement (14) for detecting the position of the switching shaft (20) and a control unit (12) which is arranged on a printed circuit board (10) are provided in the housing arrangement (4), wherein the sensor arrangement (14) is electronically connected with the control unit (12), which in turn can be connected with the drive device, wherein the sensor arrangement (14) comprises a shift gear wheel (42; 42') which is operatively connected with the shift shaft (20) and which meshes with at least two sensor gear wheels (38, 40; 38', 40'), wherein the at least two sensor gear wheels (38, 40; 38', 40') have a different number of teeth and wherein each sensor gear wheel (38, 40; 38', 40') is assigned a non-contact sensor element (26, 28), **characterized in that** the sensor arrangement (14) is also arranged on the printed circuit board (1), wherein the respective sensor element (26, 28) is implemented as a Hall sensor, or as an AMR sensor or as a THR sensor, which interacts with a permanent magnet (30, 32) that is firmly connected with the respective sensor gear wheel (38, 40; 38', 40'), wherein each sensor element (26, 28) is provided on the printed circuit board (10) below a bearing shell (44, 46) for the respective sensor gear wheel (38, 40; 38', 40'), wherein the respective permanent magnet (30, 32) is arranged in a form-fitting manner in a cavity (34, 36) of the respective sensor gear wheel (38, 40; 38', 40'), wherein the sensor gear wheel (38, 40; 38', 40') and the permanent magnet (30, 32) are rotatably supported on the bearing shell (44, 46).

2. Position detection arrangement according to one of the preceding claims, **characterized in that** an angular resolution of the shift gear (42) can be set by the control unit (12).

3. Position detection arrangement according to claim 2, **characterized in that** the control unit (12) comprises a programming switch (56) as setting means, by which a finite number n of angular resolutions can be switched.

4. Position detection arrangement according to claim 3, **characterized in that** the housing arrangement (4) comprises a mounting area (58) through which the programming switch (56) is accessible.

5. Position detection arrangement according to one of the preceding claims, **characterized in that** a gear stage (64) for the switching shaft (20) is provided.

6. Position detection arrangement according to one of the preceding claims, **characterized in that** the shift gear wheel (42; 42') and the sensor gear wheels (38, 40; 38', 40') comprise an oppositely angled spur gear toothing, wherein the shift gear wheel (42; 42') meshes with the sensor gear wheels (38, 40; 38', 40') under preload by means of a preloading member (66).

7. Position detection arrangement according to claim 6, **characterized in that** the preloading member (66) is implemented as a helical compression spring.

## Revendications

1. Arrangement de détection de position pour portes ou portails déplaçables par un appareil d'entraînement, avec un arrangement de boîtier (4) dans lequel est prévu un arbre de commutation (20) qui peut être relié à un arbre d'entraînement de l'appareil d'entraînement, un ensemble de capteurs (14) pour la détection de la position de l'arbre de commande (20) et une unité de commande (12) disposée sur une platine (10) étant prévus dans l'arrangement de boîtier (4), l'ensemble de capteurs (14) est relié électroniquement à l'unité de commande (12), qui peut elle-même être reliée à l'appareil d'entraînement, l'ensemble de capteurs (14) comprend une roue dentée de commande (42 ; 42') qui s'engrène avec au moins deux roues dentées de capteur (38, 40 ; 38', 40'), les au moins deux roues dentées de capteur (38, 40 ; 38', 40') comprenant un nombre de dents différent et chaque roue dentée de capteur (38, 40 ; 38', 40') est associé à un organe de détection sans contact (26, 28), **caractérisé en ce que** l'ensemble de capteurs (14) est aussi disposé sur la platine (1), l'organe de détection respectif (26, 28) est réalisé comme un capteur à effet Hall, ou comme un capteur AMR ou comme un capteur THR, qui est relié à une roue dentée de détection respective (38, 40 ; 38', 40'), l'organe de détection (26, 28) coopérant sur la platine (10) sous une coquille de coussinet (44, 46) pour la roue dentée de détection respective (38, 40 ; 38', 40'), l'aimant permanent respectif (30, 32) est disposé par complémentarité de forme dans une cavité (34, 36) de la roue dentée de capteur respective (38, 40 ; 38', 40'), la roue dentée de capteur (38, 40 ; 38', 40') et l'aimant permanent (30, 32) étant montés rotatifs sur la coquille de coussinet (44, 46).

2. Arrangement de détection de position selon l'une des revendications précédentes, **caractérisé en ce qu'**une résolution angulaire de la roue dentée de commutation (42) est ajustable par l'unité de commande (12).

3. Arrangement de détection de position selon la revendication 2, **caractérisé en ce que** l'unité de commande (12) comprend un commutateur de programmation (56) comme un moyen de réglage, par lequel un nombre fini n de résolutions angulaires peut être commuté.

4. Arrangement de détection de position selon la revendication 3, **caractérisé en ce que** l'arrangement de boîtier (4) comprend une surface de montage (58) à travers laquelle le commutateur de programmation (56) est accessible.

5. Arrangement de détection de position selon l'une quelconque des revendications précédentes, **caractérisé en ce qu'**il est prévu un étage de transmission (64) pour l'arbre de commutation (20).

6. Arrangement de détection de position selon l'une des revendications précédentes, **caractérisé en ce que** le pignon de commutation (42 ; 42') et les pignons de détection (38, 40 ; 38', 40') comprennent une denture frontale inclinée en sens inverse, le pignon de commutation (42 ; 42') engrené sous précontrainte avec les pignons de détection (38, 40 ; 38', 40') au moyen d'un organe de précontrainte (66).

7. Arrangement de détection de position selon la revendication 6, **caractérisé en ce que** l'organe de précontrainte (66) est conçu comme un ressort de compression hélicoïdal.
